# EUROPÄISCHE PATENTSCHRIFT

(11) **EP 3 230 590 B1**
(45) Veröffentlichungstag und Bekanntmachung des Hinweises auf die Patenterteilung: **10.04.2019**
(21) Anmeldenummer: 15820084.0
(22) Anmeldetag: 16.12.2015
(51) Int. Cl.: F04B 43/12, F04B 51/00

(54) **PERISTALTIKPUMPE**
LABORATORY INSTRUMENT
APPAREIL DE LABORATOIRE

(30) Priorität: 17.12.2014 DE 102014118853
(43) Veröffentlichungstag der Anmeldung: 18.10.2017
(73) Patentinhaber: Hans Heidolph GmbH, 93309 Kelheim (DE)
(72) Erfinder: RUBINSHTEYN, Sergiy, 90469 Nürnberg (DE)
(74) Vertreter: Manitz Finsterwald Patent- und Rechtsanwaltspartnerschaft mbB
(86) Internationale Anmeldenummer: PCT/EP2015/080036
(87) Internationale Veröffentlichungsnummer: WO 2016/097008

(56) Entgegenhaltungen:
- WO-A1-2004/057190
- DE-A1-102010 002 133

## Beschreibung

Die Erfindung betrifft ein Laborgerät, insbesondere eine Peristaltikpumpe, mit Zubehörteil, insbesondere Pumpenkopf, das an dem Laborgerät abnehmbar und/oder austauschbar angeordnet ist, gemäß den Merkmalen des Oberbegriffs des Anspruchs 1. Ein derartiges Laborgerät ist aus der DE 10 2010 002 133 A1 oder der WO 2004/057190 A1 bekannt.

Peristaltikpumpen sind grundsätzlich bekannt. An diesen Pumpen können unterschiedliche Pumpenköpfe angebracht werden, welche sich beispielsweise hinsichtlich ihrer Fördergeschwindigkeit und/oder Fördermenge unterscheiden. Auch kann es sich bei den Pumpenköpfen um Ein- oder Mehrkanalpumpenköpfe handeln. Typische Fördermengen liegen im Bereich von 0,3 bis 4.200 ml pro Minute für Einkanalpumpenköpfe bzw. 0,005 bis 400 ml pro Minute pro Kanal für Mehrkanalpumpenköpfe.

Bei herkömmlichen Peristaltikpumpen muss ein Benutzer bei einem Pumpenkopfwechsel die Bauart des neu verwendeten Pumpenkopfes und/oder Betriebsparameter der Peristaltikpumpe für den Betrieb mit dem neuen Pumpenkopf entsprechend manuell einstellen bzw. anpassen. Falls dies versehentlich unterbleibt, wird die Peristaltikpumpe mit falschen Durchflussmengen betrieben.

Auch bei anderen Laborgeräten kann sich eine falsche Zuordnung eines Zubehörteils als nachteilig erweisen und insbesondere zu einer Beschädigung des Laborgeräts bzw. zu einem Betrieb mit falschen Parametern führen.

Es ist daher eine Aufgabe der Erfindung, ein Laborgerät mit Zubehörteil zu schaffen, bei welchem sich ein Austausch des Zubehörteils effizient und einfach gestaltet.

Die Lösung dieser Aufgabe erfolgt durch ein Laborgerät mit Zubehörteil mit den Merkmalen der unabhängigen Ansprüche.

Gemäß einem Aspekt der Erfindung umfasst das Laborgerät mit Zubehörteil eine Vorrichtung zum automatischen Erkennen des Zubehörteils aus einer Mehrzahl von an dem Laborgerät abnehmbar anordenbaren Zubehörteilen, insbesondere voneinander verschiedenen Pumpenköpfen. Vorzugsweise können auf diese Weise nicht nur der Pumpenkopf für eine Peristaltikpumpe bzw. einer Peristaltikpumpe, sondern auch beliebige andere Bauteile bzw. Zubehörteile für beliebige Laborgeräte automatisch erkannt werden.

Die Erkennungsvorrichtung weist zubehörseitig eine Kodierung und laborgerätseitig eine Erfassungseinheit zum Erfassen der Kodierung auf.

Dadurch, dass das Zubehörteil automatisch mithilfe der Kodierung erkannt wird, muss ein Benutzer beispielsweise nicht manuell die Art des Pumpenkopfes einstellen. Auf diese Weise werden die Benutzerfreundlichkeit sowie die Effizienz bei einem Wechsel des Pumpenkopfes bzw. der Bauart des Pumpenkopfes wesentlich erhöht.

Als Kodierung ist grundsätzlich auch eine mechanische Kodierung möglich, bei der insbesondere eine bestimmte Anordnung von Stiften oder dergleichen vorgesehen sein kann, welche von der Erfassungseinheit, insbesondere einer entsprechenden Gegenkodierung, erkannt werden kann.

Bevorzugt ist die Erfassungseinheit jedoch dazu ausgebildet, die Kodierung berührungslos bzw. kontaktlos zu erfassen. Auf diese Weise kann insbesondere die IP-Schutzklasse des Laborgeräts sowie des Zubehörteils trotz Erkennungsvorrichtung erhalten bleiben, da keine mechanischen Elemente durch ein Gehäuse des Laborgeräts bzw. des Zubehörteils hindurchgeführt werden müssen und somit ein unveränderter Schutz gegen Berührung und Eindringen von Wasser und Schmutz in die Gehäuse gegeben ist.

Baugleiche bzw. gleiche Zubehörteile können dieselbe Kodierung aufweisen, während Zubehörteile unterschiedlicher Bauart bzw. Art voneinander verschiedene Kodierungen aufweisen können. Beispielsweise können gleiche bzw. identische Pumpenköpfe gegeneinander ausgetauscht werden, und die dazugehörige Einstellung an der Peristaltikpumpe kann in diesem Fall erhalten bleiben. Unterscheiden sich die Pumpenköpfe jedoch voneinander, so kann dies anhand der Kodierung erfasst und die Pumpe entsprechend eingestellt werden.

Weiterbildungen der Erfindung sind auch den abhängigen Ansprüchen, der Beschreibung sowie den beigefügten Zeichnungen zu entnehmen.

Gemäß einer Ausführungsform handelt es sich bei der Erkennungsvorrichtung um eine auf einer magnetischen Kodierung basierende, berührungslos arbeitende Erkennungsvorrichtung. Somit sind keine zusätzlichen Öffnungen in einem Gehäuse des Laborgeräts und/oder des Zubehörteils notwendig, um die Kodierung zu erfassen.

Nach einer weiteren Ausführungsform umfasst die Kodierung zumindest einen Magneten, insbesondere Permanentmagneten, und die Erfassungseinheit zumindest einen, vorzugsweise dem jeweiligen Magneten zugeordneten, Magnetfeldsensor, insbesondere Hall-Sensor. Hierbei kann es sich z.B. um kostengünstige Standardbauteile handeln. Als Magnet kann grundsätzlich auch ein Elektromagnet verwendet werden. Eine Kodierung über eine Magnetfeldstärke kann dabei vergleichsweise präzise erfolgen. Elektromagnete müssen allerdings mit Strom versorgt werden. Grundsätzlich ist es denkbar, dass ein einziger Magnetfeldsensor mehreren Magneten zugeordnet ist, d.h. mehrere Magnete erfasst. Vorzugsweise ist jedoch jedem Magneten ein separater Magnetfeldsensor, insbesondere Hall-Sensor, zugeordnet, so dass die Erfassung auf besonders einfache Weise und gut unterscheidbar erfolgen kann. Der Hall-Sensor kann insbesondere einen analogen Signal- bzw. Spannungsausgang aufweisen. Darüber hinaus kann die Kodierung auch ein Fehlen eines Magneten umfassen.

Nach einer weiteren Ausführungsform umfasst die Kodierung einen Zustand des Permanentmagneten, welcher die Position und/oder Orientierung des Permanentmagneten betrifft. Ein Permanentmagnet kann somit verschiedene Zustände einnehmen. Ein Zustand kann sich aus einer Kombination einer bestimmten Position mit einer bestimmten Orientierung ergeben.

Gemäß einer weiteren Ausführungsform umfasst die Position des Permanentmagneten zumindest einen ersten oder zweiten Abstand vom Laborgerät. Grundsätzlich sind auch mehr als zwei unterschiedliche Abstände vom Laborgerät denkbar, so dass die Anzahl der grundsätzlich möglichen Kodierungen und damit die Anzahl voneinander unterscheidbarer Bauarten von Zubehörteilen erhöht werden kann. Da mit einer größer werdenden Anzahl an grundsätzlich möglichen Abständen vom Laborgerät üblicherweise eine Verringerung des gegenseitigen Abstands zwischen den einzelnen Abständen einhergehen wird, können sich bei Verwendung von kostengünstigen Permanentmagneten, deren Magnetfeldstärken oft hohe Fertigungstoleranzen aufweisen, Auflösungsschwierigkeiten ergeben, so dass in diesem Fall höherwertige Permanentmagnete verwendet werden sollten. Grundsätzlich gilt, dass eine eindeutige Unterscheidbarkeit der unterschiedlichen Abstände voneinander durch die Erfassungseinheit gewährleistet werden sollte.

Nach einer weiteren Ausführungsform ist der Permanentmagnet derart orientiert, dass der Nordpol oder Südpol des Permanentmagneten dem Laborgerät zugewandt ist. Beispielsweise ergeben sich hierbei in Kombination mit zwei unterschiedlichen Abständen vom Laborgerät insgesamt vier verschiedene Zustandskombinationen. Grundsätzlich kann der Permanentmagnet auch beliebige andere und/oder weitere diskrete Orientierungen einnehmen, wobei wiederum deren Unterscheidbarkeit durch die Erfassungseinheit gewährleistet werden sollte.

Die Kodierung umfasst Zustände mehrerer Magnete, insbesondere Permanentmagnete. Vorzugsweise sind somit pro Zubehörteil mehrere Magnete vorgesehen, wodurch sich die Gesamtanzahl der möglichen Zustandskombinationen deutlich erhöht. Die mehreren Magnete sind insbesondere voneinander beabstandet, sodass sich diese vorzugsweise nicht gegenseitig beeinflussen. Insbesondere kann die Erfassungseinheit eine entsprechende Anzahl an mehreren, dem jeweiligen Magneten zugeordneten Magnetfeldsensoren, insbesondere Hall-Sensoren, umfassen. Grundsätzlich ist es jedoch auch denkbar, dass ein Magnetfeldsensor mehreren Magneten zugeordnet ist.

Gemäß einer weiteren Ausführungsform umfasst die Kodierung pro Magnet einen von fünf möglichen Zuständen. Ein Zustand kann dabei insbesondere ein Fehlen des Magneten, eine Positionierung des Magneten in einem ersten Abstand vom Laborgerät, wobei der Nordpol des Magneten dem Laborgerät zugewandt ist, eine Positionierung des Magneten in einem ersten Abstand vom Laborgerät, wobei der Südpol des Magneten dem Laborgerät zugewandt ist, eine Positionierung des Magneten in einem zweiten Abstand vom Laborgerät, wobei der Nordpol des Magneten dem Laborgerät zugewandt ist, oder eine Positionierung des Magneten in einem zweiten Abstand vom Laborgerät, wobei der Südpol des Magneten dem Laborgerät zugewandt ist, umfassen.

Auch ein Fehlen eines Magneten an einer entsprechenden Position kann somit für die Kodierung verwendet werden. Sind mehrere Magnete vorgesehen, so ergeben sich pro Magnet fünf Zustandskombinationen. Bei n Magneten ergeben sich folglich 5ⁿ mögliche Zustandskombinationen. Bevorzugt ist jedoch, wenn der Fall, dass kein einziger Magnet vorhanden ist, nicht zur Erkennung eines Zubehörteils herangezogen wird, so dass dann insgesamt 5ⁿ - 1 voneinander verschiedene Bauteile erkannt werden können. Beispielhaft ergeben sich somit bei der Verwendung von zwei Magneten 25 mögliche Zustandskombinationen, d.h. 24 verschiedene Zubehörteile können erkannt werden.

Nach einer weiteren Ausführungsform ist zumindest ein Magnet in einem ersten Abstand vom Laborgerät und zumindest ein Magnet in einem zweiten Abstand vom Laborgerät positioniert. Auf diese Weise kann die Zuverlässigkeit der Erkennung einer Kodierung erhöht werden. Befinden sich nämlich sämtliche Magnete in demselben Abstand vom Laborgerät, wird für alle Magneten zumindest im Wesentlichen derselbe Magnetfeldstärkewert detektiert, so dass ein Vergleich dieses Werts mit einem vorgegebenen Referenzwert erforderlich ist, um festzustellen, ob sich die Magnete alle in dem ersten oder alle in dem zweiten Abstand von dem Laborgerät befinden. Tritt hierbei ein systematischer Fehler auf, beispielsweise in Form eines Offsets, kann gegebenenfalls nicht mehr zuverlässig bestimmt werden, in welchem Abstand die Magnete angeordnet sind. Dadurch, dass sich in jedem Abstand zumindest ein Magnet befindet, wird eine relative Referenz geschaffen. Durch die aufgrund der verschiedenen Abstände unterschiedlichen Magnetfeldstärken kann zuverlässig die Position der jeweiligen Magnete bestimmt werden. Die Anzahl an möglichen Zustandskombinationen wird durch diese Randbedingung reduziert, da die beiden Zustände, dass sich alle Magnete in dem ersten Abstand oder in dem zweiten Abstand befinden, ausgeschlossen werden.

Gemäß einer weiteren Ausführungsform umfasst die Erkennungsvorrichtung eine mit dem jeweiligen Magnetfeldsensor verbundene Auswerteeinheit, insbesondere einen Mikrocontroller, die dazu ausgelegt ist, ein einer Stärke des Magnetfelds des jeweiligen Magneten entsprechendes Ausgangssignal des Magnetfeldsensors auszuwerten. Ist beispielsweise kein Magnet vorhanden, so kann die Ausgangsspannung eines Hall-Sensors gleich der Hälfte der Versorgungsspannung des Hall-Sensors betragen. Alternativ kann der Nullpunkt auch anders gewählt werden, sodass beispielsweise keine Ausgangsspannung gemessen wird, wenn kein Magnet vorhanden ist. Ist hingegen ein Magnet vorgesehen, so ergeben sich abhängig von der Orientierung des Magneten sowie vom Abstand zum Laborgerät insgesamt vier verschiedene Spannungspegel, welche ausgewertet werden können. Die Ausgangsspannung des Hall-Sensors wird dabei insbesondere durch den Mikrocontroller erkannt und ausgewertet. Die jeweiligen Zustände können somit auf einfache Weise erfasst und das Laborgerät entsprechend eingestellt werden.

Gemäß einer weiteren Ausführungsform umfasst ein Gehäuse des Zubehörteils und/oder ein Gehäuse des Laborgeräts zumindest im Wirkungsbereich des Magneten ein die Stärke des Magnetfelds zumindest im Wesentlichen nicht beeinflussendes bzw. nicht-metallisches, nicht-magnetisches und/oder nicht- ferromagnetisches Material. Das Feld des Magneten wird folglich nicht oder nur geringfügig abgeschirmt und ist somit von dem Magnetfeldsensor gut erfassbar.

Nach einem weiteren Aspekt betrifft die Erfindung eine Vorrichtung zum automatischen Erkennen eines an einem Laborgerät, insbesondere einer Peristaltikpumpe, abnehmbar und/oder austauschbar angeordneten Zubehörteils, insbesondere Pumpenkopfes, aus einer Mehrzahl von an dem Laborgerät abnehmbar anordenbaren Zubehörteilen, insbesondere voneinander verschiedenen Pumpenköpfen, wobei die Erkennungsvorrichtung zubehörseitig eine Kodierung und laborgerätseitig eine Erfassungseinheit zum Erfassen der Kodierung aufweist.

Gemäß einem weiteren Aspekt betrifft die Erfindung einen Satz von an einem Laborgerät, insbesondere einer Peristaltikpumpe, abnehmbar und/oder austauschbar anordenbaren, voneinander verschiedenen Zubehörteilen, insbesondere Pumpenköpfen, wobei die Zubehörteile jeweils eine Kodierung aufweisen, die sich voneinander unterscheiden, und wobei die jeweilige Kodierung von einer Erfassungseinheit des Laborgeräts erfassbar ist, um das jeweilige Zubehörteil automatisch aus dem Satz von Zubehörteilen zu erkennen. Unterschiedliche Zubehörteile können hierbei verschiedene Kodierungen aufweisen, während gleiche bzw. identische Zubehörteile dieselbe Kodierung aufweisen können.

Die im Zusammenhang mit dem erfindungsgemäßen Laborgerät mit Zubehörteil beschriebenen Weiterbildungen sind auch auf die erfindungsgemäße Vorrichtung zum automatischen Erkennen eines an einem Laborgerät abnehmbar und/oder austauschbar angeordneten Zubehörteils aus einer Mehrzahl von an dem Laborgerät abnehmbar anordenbaren Zubehörteilen und den erfindungsgemäßen Satz von an einem Laborgerät abnehmbar anordenbaren, voneinander verschiedenen Zubehörteilen übertragbar.

Die Erfindung wird im Folgenden beispielhaft unter Bezugnahme auf die Zeichnungen beschrieben. Es zeigen:
- Fig. 1A bis E: schematische Schnittansichten verschiedener an einem erfindungsgemäßen Laborgerät angeordneter Zubehörteile mit jeweils unterschiedlichen Kodierungen, und
- Fig. 2: eine schematische Schnittansicht eines an einem erfindungsgemäßen Laborgerät angeordneten Zubehörteils mit einer mehrere Magnete umfassenden Kodierung.

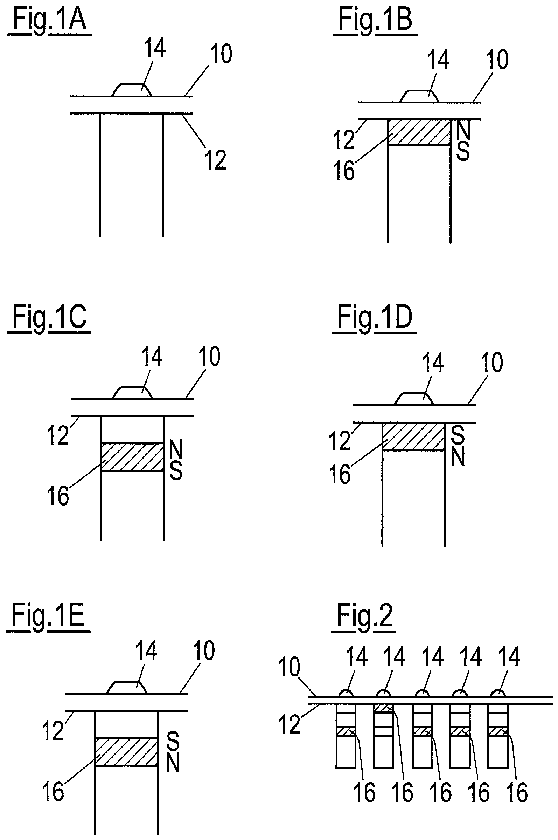

In Fig. 1B ist ein Gehäuse eines beispielsweise als Peristaltikpumpe 10 ausgebildeten Laborgeräts gezeigt. An der Pumpe 10 ist jeweils ein abnehmbares, als Pumpenkopf 12 ausgebildetes Zubehörteil angeordnet, von dem ebenfalls lediglich das Gehäuse dargestellt ist. Die Peristaltikpumpe 10 umfasst einen als Hall-Sensor 14 ausgebildeten Magnetfeldsensor, welcher als Erfassungseinheit dient und dazu ausgebildet ist, ein Magnetfeld eines im Pumpenkopf 12 angeordneten Permanentmagneten 16 zu erfassen. Durch den gewählten Abstand des Permanentmagneten 16 zu der Peristaltikpumpe 10 sowie der gewählten Orientierung des Permanentmagneten 16 relativ zu der Peristaltikpumpe 10 erfolgt eine Kodierung des an der Peristaltikpumpe 10 angeordneten Pumpenkopfs 12. Die Bestandteile, welche zum Erkennen des Pumpenkopfes 12 an der Peristaltikpumpe 10 dienen, können auch entsprechend bei anderen Zubehörteilen und anderen Laborgeräten eingesetzt werden.

Bei den in den Fig. 1A bis 1E dargestellten fünf Pumpenköpfen 12 handelt es sich um Pumpenköpfe 12 fünf voneinander verschiedener Bauarten, mit denen die dargestellte Peristaltikpumpe 10 jeweils betreibbar ist. Die verschiedenen Pumpenkopf-Bauarten können sich beispielsweise hinsichtlich ihrer Fördergeschwindigkeit und/oder Fördermenge unterscheiden, und/oder darin, ob es sich um Ein- oder Mehrkanalpumpenköpfe handelt. Dabei ist vorgesehen, dass sich die Kodierungen der verschiedenen Pumpenkopf-Bauarten durch Variation des Abstands des jeweiligen Permanentmagneten 16 zu der Peristaltikpumpe 10 sowie der Orientierung des jeweiligen Permanentmagneten 16 relativ zu der Peristaltikpumpe 10 voneinander unterscheiden (Fig. 1B bis Fig. 1E), oder der Permanentmagnet 16 ganz weggelassen wird (Fig. 1A). Grundsätzlich weisen baugleiche Pumpenköpfe 12 dieselbe Kodierung auf, Pumpenköpfe 12 unterschiedlicher Bauart voneinander verschiedene Kodierungen.

In Fig. 1A ist in dem ersten Pumpenkopf 12 kein Magnet vorgesehen. Die Ausgangsspannung des Hall-Sensors 14 ist dabei derart eingestellt, dass sie die Hälfte der Versorgungsspannung des Hall-Sensors 14 entspricht. Darauf basierend wird mithilfe eines nicht dargestellten Mikroprozessors ein erster Zustand in Form des Nicht-Vorhandenseins eines Permanentmagneten erkannt. Es wird der Pumpenkopf 12 der ersten Bauart erkannt.

In Fig. 1B ist in dem zweiten Pumpenkopf 12 ein Permanentmagnet 16 vorgesehen, dessen Nordpol N der Pumpe 10 zugewandt ist. Der Magnet 16 befindet sich in einer ersten Position, vergleichsweise nahe an der Pumpe 10. Es ergibt sich am Hall-Sensor 14 eine für diesen Zustand charakteristische zweite Spannung. Auf diese Weise kann ein zweiter Zustand erfasst und somit der Pumpenkopf 12 der zweiten Bauart erkannt werden.

Gemäß Fig. 1C ist der Magnet 16 des dritten Pumpenkopfes 12 in einer zweiten Position angeordnet, die sich weiter von der Pumpe 10 entfernt befindet als in Fig. 1B. Die Orientierung ist hingegen identisch, d.h. dass auch hier der Nordpol N der Pumpe 10 zugewandt ist. Aufgrund des unterschiedlichen Abstandes ergibt sich hierbei eine dritte Ausgangsspannung, sodass ein dritter Zustand bestimmt und der Pumpenkopf 12 der dritten Bauart erkannt werden kann.

In Fig. 1D ist der Magnet 16 des vierten Pumpenkopfes 12 derart orientiert, dass der Südpol S der Pumpe 10 zugewandt ist. Der Magnet 16 befindet sich dabei in derselben Position wie in Fig. 1B. Durch die am Hall-Sensor 14 gemessene vierte Spannung kann ein vierter Zustand erfasst und dadurch der Pumpenkopf 12 der vierten Bauart erkannt werden.

Schließlich ist in Fig. 1E der Südpol S des Magneten 16 des fünften Pumpenkopfes 12 der Pumpe 10 zugewandt (wie in Fig. 1D), und der Magnet 16 befindet sich in der zweiten Position (wie in Fig. 1C). Somit ergibt sich eine fünfte Spannung an dem Hall-Sensor 14, sodass ein fünfter Zustand bestimmt und der fünfte Pumpenkopf 12 erkannt werden kann.

Wird also ein bestimmter Pumpenkopf 12 auf die Peristaltikpumpe 10 aufgesetzt, erzeugt der Hall-Sensor 14 eine für die jeweilige Kodierung des Pumpenkopfs 12 charakteristische Spannung, anhand der automatisch erkannt werden kann, welcher Pumpenkopf 12 bzw. welche Pumpenkopf-Bauart mit der Peristaltikpumpe 10 verbunden ist. Die Peristaltikpumpe 10 kann dann automatisch an einen Betrieb mit dem jeweiligen erfassten Pumpenkopf 12 bzw. der jeweiligen erfassten Pumpenkopf-Bauart angepasst werden. Ein Pumpenkopfwechsel gestaltet sich auf diese Weise besonders bedienungsfreundlich und effizient.

Es kann grundsätzlich auch vorgesehen sein, dass die Pumpenköpfe 12 jeweils mehr als einen Magneten 16 aufweisen, um dadurch die Anzahl der unterschiedlichen Kodierungsmöglichkeiten zu erhöhen. Sind an einer Peristaltikpumpe beispielsweise n Hall-Sensoren vorgesehen und an einem Pumpenkopf n Permanentmagnete, so ergeben sich insgesamt 5ⁿ Zustandskombinationen, so dass 5ⁿ bzw. 5ⁿ - 1 (für den Fall, dass die Kodierung ohne einen einzigen Magneten nicht verwendet wird) mögliche Bauarten erkannt werden können.

In Fig. 2 ist ein Pumpenkopf 12 gezeigt, welcher eine Kodierung mit fünf Magneten 16 aufweist. Der von links gesehen zweite Magnet 16 befindet sich dabei in einem ersten Abstand von der Pumpe 10, und die übrigen Magnete 18 befinden sich in einem gemeinsamen zweiten Abstand von der Pumpe 10, der größer ist als der erste Abstand. Jedem Magneten 16 ist zur Detektion der jeweiligen Magnetfeldstärke an der Pumpe 10 ein eigener Hall-Sensor 14 zugeordnet. Der Hall-Sensor 14, der dem Magneten 16 in dem ersten Abstand zugeordnet ist, detektiert eine erste Magnetfeldstärke, und die übrigen Hall-Sensoren 16 detektieren eine zweite Magnetfeldstärke, die kleiner ist als die erste Magnetfeldstärke. Dadurch, dass zumindest ein Magnet 16 in unmittelbarer Nähe zur Pumpe 10 angeordnet ist und zumindest ein Magnet 16, hier vier Magnete 16, weiter beabstandet von der Pumpe 10 angeordnet ist/sind, kann zur Feststellung, ob sich ein jeweiliger Magnet 16 in einem ersten Abstand oder einem zweiten Abstand von der Pumpe 10 befindet, auf einen Vergleich der jeweils detektierten Magnetfeldstärke mit einem vorgegebenen Referenzwert verzichtet werden. Vielmehr kann durch Vergleich der jeweiligen detektierten Magnetfeldstärke mit den übrigen detektierten Magnetfeldstärken ermittelt werden, ob sich ein jeweiliger Magnet 16 in dem ersten oder dem zweiten Abstand vom Hall-Sensor 14 befindet.

### Bezugszeichenliste

- 10: Peristaltikpumpe
- 12: Pumpenkopf
- 14: Hall-Sensor
- 16: Permanentmagnet

- N: Nordpol
- S: Südpol

## Patentansprüche

1. Laborgerät (10), insbesondere Peristaltikpumpe, mit Zubehörteil (12), insbesondere Pumpenkopf, das an dem Laborgerät abnehmbar angeordnet ist, mit einer Vorrichtung zum automatischen Erkennen des Zubehörteils aus einer Mehrzahl von an dem Laborgerät (10) abnehmbar anordenbaren Zubehörteilen (12), insbesondere voneinander verschiedenen Pumpenköpfen, wobei die Erkennungsvorrichtung zubehörseitig eine Kodierung (16) und laborgeräteseitig eine Erfassungseinheit (14) zum Erfassen der Kodierung (16) aufweist, und wobei die Kodierung Zustände mehrerer Magnete (16), insbesondere Permanentmagnete, umfasst,
**dadurch gekennzeichnet, dass**
zumindest ein Magnet (16) in einem ersten Abstand vom Laborgerät (10) und zumindest ein Magnet (16) in einem zweiten Abstand vom Laborgerät (10) positioniert ist.

2. Laborgerät mit Zubehörteil nach Anspruch 1,
**dadurch gekennzeichnet, dass**
es sich bei der Erkennungsvorrichtung um eine, insbesondere auf einer magnetischen Kodierung (16) basierende, berührungslos arbeitende Erkennungsvorrichtung handelt.

3. Laborgerät mit Zubehörteil nach Anspruch 1 oder 2,
**dadurch gekennzeichnet, dass**
die Kodierung zumindest einen Magneten (16), insbesondere Permanentmagneten, und die Erfassungseinheit zumindest einen, vorzugsweise dem jeweiligen Magneten (16) zugeordneten, Magnetfeldsensor (14), insbesondere Hall-Sensor, umfasst.

4. Laborgerät mit Zubehörteil nach Anspruch 3,
**dadurch gekennzeichnet, dass**
die Kodierung einen Zustand des Permanentmagneten (16) umfasst, welcher die Position und/oder Orientierung des Permanentmagneten (16) betrifft.

5. Laborgerät mit Zubehörteil nach Anspruch 4,
**dadurch gekennzeichnet, dass**
die Position des Permanentmagneten (16) zumindest einen ersten oder zweiten Abstand vom Laborgerät (10) umfasst.

6. Laborgerät mit Zubehörteil nach Anspruch 4 oder 5,
**dadurch gekennzeichnet, dass**
der Permanentmagnet (16) derart orientiert ist, dass der Nordpol (N) oder Südpol (S) des Permanentmagneten (16) dem Laborgerät (10) zugewandt ist.

7. Laborgerät mit Zubehörteil nach einem der vorhergehenden Ansprüche,
**dadurch gekennzeichnet, dass**
die mehreren Magnete (16) voneinander beabstandet sind und/oder die Erfassungseinheit eine entsprechende Anzahl an mehreren, dem jeweiligen Magneten (16) zugeordneten Magnetfeldsensoren (14), insbesondere Hall-Sensoren, umfasst.

8. Laborgerät mit Zubehörteil nach Anspruch 7,
**dadurch gekennzeichnet, dass**
die Kodierung pro Magnet (16) einen von fünf möglichen Zuständen umfasst, insbesondere
ein Fehlen des Magneten,
eine Positionierung des Magneten (16) in einem ersten Abstand vom Laborgerät (10), wobei der Nordpol (N) des Magneten (16) dem Laborgerät (10) zugewandt ist,
eine Positionierung des Magneten (16) in einem ersten Abstand vom Laborgerät (10), wobei der Südpol (S) des Magneten (16) dem Laborgerät (10) zugewandt ist,
eine Positionierung des Magneten (16) in einem zweiten Abstand vom Laborgerät (10), wobei der Nordpol (N) des Magneten (16) dem Laborgerät (10) zugewandt ist, oder
eine Positionierung des Magneten (16) in einem zweiten Abstand vom Laborgerät (10), wobei der Südpol (S) des Magneten (16) dem Laborgerät (10) zugewandt ist.

9. Laborgerät mit Zubehörteil nach einem der vorhergehenden Ansprüche,
**dadurch gekennzeichnet, dass**
die Erkennungsvorrichtung eine mit dem jeweiligen Magnetfeldsensor (14) verbundene Auswerteeinheit, insbesondere einen Mikrocontroller, umfasst, die dazu ausgelegt ist, ein einer Stärke des Magnetfelds des jeweiligen Magneten (16) entsprechendes Ausgangssignal des Magnetfeldsensors (14) auszuwerten.

10. Laborgerät mit Zubehörteil nach einem der vorhergehenden Ansprüche,
**dadurch gekennzeichnet, dass**
ein Gehäuse des Zubehörteils (12) und/oder ein Gehäuse des Laborgeräts (10) zumindest im Wirkungsbereich des Magneten (16) ein die Stärke des Magnetfelds zumindest im Wesentlichen nicht beeinflussendes, insbesondere nicht- metallisches, nicht-magnetisches und/oder nicht-ferromagnetisches, Material umfasst.

## Claims

1. A laboratory device (10), in particular a peristaltic pump, having an accessory part (12), in particular a pump head, which is removably arranged at the laboratory device; and having an apparatus for an automatic recognition of the accessory part from a plurality of accessory parts (12), in particular mutually different pump heads, removably arrangeable at the laboratory device (10), wherein the recognition apparatus has a coding (16) at the accessory side and a detection unit (14) for detecting the coding (16) at the laboratory device side; and wherein the coding comprises states of a plurality of magnets (16), in particular permanent magnets,
**characterized in that**
at least one magnet (16) is positioned at a first spacing from the laboratory device (10) and at least one magnet (16) is positioned at a second spacing from the laboratory device (10).

2. A laboratory device having an accessory part in accordance with claim 1,
**characterized in that**
the recognition apparatus is a recognition apparatus which works contactlessly and which is in particular based on a magnetic coding (16).

3. A laboratory device having an accessory part in accordance with claim 1 or claim 2,
**characterized in that**
the coding comprises at least one magnet (16), in particular a permanent magnet; and **in that** the detection unit comprises at least one magnetic field sensor (14), in particular a Hall sensor, preferably associated with the respective magnet (16).

4. A laboratory device having an accessory part in accordance with claim 3,
**characterized in that**
the coding comprises a state of the permanent magnet (16) which relates to the position and/or orientation of the permanent magnet (16).

5. A laboratory device having an accessory part in accordance with claim 4,
**characterized in that**
the position of the permanent magnet (16) comprises at least a first spacing or a second spacing from the laboratory device (10).

6. A laboratory device having an accessory part in accordance with claim 4 or claim 5,
**characterized in that**
the permanent magnet (16) is oriented such that the north pole (N) or the south pole (S) of the permanent magnet (16) faces the laboratory device (10).

7. A laboratory device having an accessory part in accordance with any one of the preceding claims,
**characterized in that**
the plurality of magnets (16) are spaced apart from one another; and/or **in that** the detection unit comprises a corresponding number of a plurality of magnetic field sensors (14), in particular Hall sensors, associated with the respective magnet (16).

8. A laboratory device having an accessory part in accordance with claim 7,
**characterized in that**
the coding per magnet (16) comprises one of five possible states, in particular
a lack of the magnet;
a positioning of the magnet (16) at a first spacing from the laboratory device (10), with the north pole (N) of the magnet (16) facing the laboratory device (10);
a positioning of the magnet (16) at a first spacing from the laboratory device (10), with the south pole (S) of the magnet (16) facing the laboratory device (10);
a positioning of the magnet (16) at a second spacing from the laboratory device (10), with the north pole (N) of the magnet (16) facing the laboratory device (10); or
a positioning of the magnet (16) at a second spacing from the laboratory device (10), with the south pole (S) of the magnet (16) facing the laboratory device (10).

9. A laboratory device having an accessory part in accordance with any one of the preceding claims,
**characterized in that**
the recognition apparatus comprises an evaluation unit, in particular a microcontroller, associated with the respective magnetic field sensor (14), the evaluation unit being configured to evaluate an output signal of the magnetic field sensor (14) corresponding to a strength of the magnetic field of the respective magnet (16).

10. A laboratory device having an accessory part in accordance with any one of the preceding claims,
**characterized in that**
a housing of the accessory part (12) and/or a housing of the laboratory device (10) comprises, at least in the effective region of the magnet (16), a material which at least substantially does not influence the strength of the magnetic field, in particular a non-metallic material, a non-magnetic material and/or a non-ferromagnetic material.

## Revendications

1. Appareil de laboratoire (10), en particulier pompe péristaltique, comportant un accessoire (12), en particulier une tête de pompe, qui est agencé(e) de façon amovible sur l'appareil de laboratoire, comportant un dispositif pour reconnaître automatiquement l'accessoire parmi une pluralité d'accessoires (12) susceptibles d'être agencés de façon amovible sur l'appareil de laboratoire (10), en particulier de têtes de pompe qui diffèrent les unes des autres, le dispositif de reconnaissance présentant du côté accessoire un codage (16) et du côté appareil de laboratoire une unité de détection (14) pour détecter le codage (16), et le codage incluant des états de plusieurs aimants (16), en particulier d'aimants permanents,
**caractérisé en ce que**
au moins un aimant (16) est positionné à une première distance de l'appareil de laboratoire (10) et au moins un aimant (16) est positionné à une seconde distance de l'appareil de laboratoire (10).

2. Appareil de laboratoire pourvu d'un accessoire selon la revendication 1,
**caractérisé en ce que**
le dispositif de reconnaissance est un dispositif de reconnaissance qui fonctionne sans contact physique et qui est basé en particulier sur un codage magnétique (16).

3. Appareil de laboratoire pourvu d'un accessoire selon la revendication 1 ou 2,
**caractérisé en ce que**
le codage inclut au moins un aimant (16), en particulier un aimant permanent, et l'unité de détection comprend au moins un capteur de champ magnétique (14), en particulier un capteur de Hall, associé de préférence à l'aimant respectif (16).

4. Appareil de laboratoire pourvu d'un accessoire selon la revendication 3,
**caractérisé en ce que**
le codage inclut un état de l'aimant permanent (16) qui concerne la position et/ou l'orientation de l'aimant permanent (16).

5. Appareil de laboratoire pourvu d'un accessoire selon la revendication 4,
**caractérisé en ce que**
la position de l'aimant permanent (16) inclut au moins une première ou une seconde distance de l'appareil de laboratoire (10).

6. Appareil de laboratoire pourvu d'un accessoire selon la revendication 4 ou 5,
**caractérisé en ce que**
l'aimant permanent (16) est orienté de telle sorte que le pôle Nord (N) ou le pôle Sud (S) de l'aimant permanent (16) est tourné vers l'appareil de laboratoire (10).

7. Appareil de laboratoire pourvu d'un accessoire selon l'une des revendications précédentes,
**caractérisé en ce que**
lesdits plusieurs aimants (16) sont espacés les uns des autres et/ou l'unité de détection comprend un nombre correspondant de plusieurs capteurs de champ magnétique (14), en particulier de capteurs de Hall, associés à l'aimant respectif (16).

8. Appareil de laboratoire pourvu d'un accessoire selon la revendication 7,
**caractérisé en ce que**
par aimant (16), le codage inclut un parmi cinq états possibles, en particulier
une absence de l'aimant,
un positionnement de l'aimant (16) à une première distance de l'appareil de laboratoire (10), le pôle Nord (N) de l'aimant (16) étant tourné vers l'appareil de laboratoire (10),
un positionnement de l'aimant (16) à une première distance de l'appareil de laboratoire (10), le pôle Sud (S) de l'aimant (16) étant tourné vers l'appareil de laboratoire (10),
un positionnement de l'aimant (16) à une seconde distance de l'appareil de laboratoire (10), le pôle Nord (N) de l'aimant (16) étant tourné vers l'appareil de laboratoire (10), ou
un positionnement de l'aimant (16) à une seconde distance de l'appareil de laboratoire (10), le pôle Sud (S) de l'aimant (16) étant tourné vers l'appareil de laboratoire (10).

9. Appareil de laboratoire pourvu d'un accessoire selon l'une des revendications précédentes,
**caractérisé en ce que**
le dispositif de reconnaissance comprend une unité d'évaluation, en particulier un microcontrôleur, connecté(e) au capteur de champ magnétique (14) respectif, qui est conçu(e) pour évaluer un signal de sortie du capteur de champ magnétique (14) qui correspond à une intensité du champ magnétique de l'aimant respectif (16).

10. Appareil de laboratoire pourvu d'un accessoire selon l'une des revendications précédentes,
**caractérisé en ce que**
un boîtier de l'accessoire (12) et/ou un boîtier de l'appareil de laboratoire (10) comprend, au moins dans la zone d'action de l'aimant (16), un matériau qui n'influe au moins sensiblement pas sur l'intensité du champ magnétique, en particulier un matériau non métallique, non magnétique et/ou non ferromagnétique.
